# EUROPEAN PATENT APPLICATION

(11) **EP 2 120 373 A1**
(43) Date of publication of application: **18.11.2009**
(21) Application number: 08710661.3
(22) Date of filing: 31.01.2008
(51) Int. Cl.: H04B 10/10, H04B 3/54, H04B 10/105, H04B 10/22

(54) **RECEIVING DEVICE FOR VISIBLE LIGHT COMMUNICATION, AND VISIBLE LIGHT COMMUNICATION SYSTEM**

(30) Priority: 13.03.2007 JP 2007063809
(71) Applicant: Kabushiki Kaisha Toshiba, Minato-ku Tokyo 105-8001 (JP)
(72) Inventor: The designation of the inventor has not yet been filed
(74) Representative: Henkel, Feiler & Hänzel
(86) International application number: PCT/JP2008/051551
(87) International publication number: WO 2008/111337

(57) **Abstract**

A data transmitter modulates received data and transmits the modulated data to a data receiver (12) as a carrier of illumination light. The data receiver (12) detects the received illumination light in accordance with variation in an output of a solar cell panel (13), demodulates the detected illumination light, and displays the demodulated data on a display unit (14).

## Description

### Technical Field

The present invention generally relates to a visible light communication system using visible light and, more particularly, to a visible light communication system for receiving visible light on a solar cell panel.

### Background Art

Generally, in the communication technology using visible light, a light emitting apparatus using an electro-luminescence device capable of emitting signal light formed of light modulated on the basis of input data is disclosed (see Patent Document 1).
Patent Document 1: Jpn. Pat. Appln. KOKAI Publication No. 2003-115803

### Disclosure of Invention

### [Problem to be Solved]

According to the technology disclosed in Patent Document 1, however, the power needs to be supplied to a receiver. In addition, employment of a plurality of transmitters which synchronize data is difficult.

The present invention has been accomplished to solve the above-described problem. The object of the present invention is to provide a receiver and system for visible light communication in which supply of the power to the receiver is unnecessary.

### [Means for Solving the Problem]

To achieve the above-described object, an embodiment of the present invention provides a visible light communication system, comprising a data storage apparatus, a data transmitter and a data receiver, the data transmitter comprises data receiving means for receiving data from the data storage apparatus; modulating means for modulating the data received by the data receiving means; and transmitting means for transmitting the data modulated by the modulating means to the data receiver as a carrier of illumination light, and the data receiver comprises illumination light detecting means for detecting the illumination light received by the transmitting means in accordance with an output variation of power converting means; demodulating means for demodulating the illumination light detected by the illumination light detecting means; and displaying means for displaying the data demodulated by the demodulating means.

Furthermore, an embodiment of the present invention provides a receiver of visible light communication, comprising illumination light detecting means for detecting modulated data in accordance with an output variation of power converting means, demodulating means for demodulating the illumination light detected by the illumination light detecting means, and displaying means for displaying the data demodulated by the demodulating means.

### Brief Description of Drawings

FIG. 1 is an illustration showing a visible light communication system according to an embodiment of the present invention.
FIG. 2 is a block diagram showing the visible light communication system according to the embodiment of the present invention.
FIG. 3 is a flowchart for explanation of the control of the visible light communication system receiver according to the embodiment of the present invention.
FIG. 4 is an illustration showing a structure in a case of providing a plurality of transmitters according to the embodiment of the present invention.
FIG. 5 is an illustration showing a zero cross point detecting method according to the embodiment of the present invention.
FIG. 6 is a block diagram showing a structure of a transmitter in a case of providing a plurality of transmitters according to the embodiment of the present invention.
FIG. 7 is a block diagram showing a structure in a case where a power line carrier modem is further added to the structure, according to the embodiment of the present invention.
FIG. 8 is an illustration showing a structure in a case where a plurality of transmitters according to the embodiment of the present invention are arranged together at specific positions.

### Best Mode for Carrying Out the Invention

Embodiments of the present invention will be explained below with reference to the accompanying drawings.

First, in a visible light communication system according to an embodiment of the present invention, to transmit data with illumination light from an illuminating device for LED illumination or the like, data digital- or analog-modulated with a subcarrier are output with the illumination light serving as a carrier. The illumination light which carries the data is invisible to a human eye. The data are transmitted in a state which is apparently the same as that of the other general illumination. A receiving-side apparatus comprises a solar cell panel, and can obtain power from the solar cell panel by receiving the illumination light on the solar cell panel. The power is supplied as a power source of the receiving-side apparatus. In addition, the transmitted data can be obtained by extracting the modulated data carried by the illumination light from output variation waveforms of voltage and current from the solar cell panel and modulating the data.

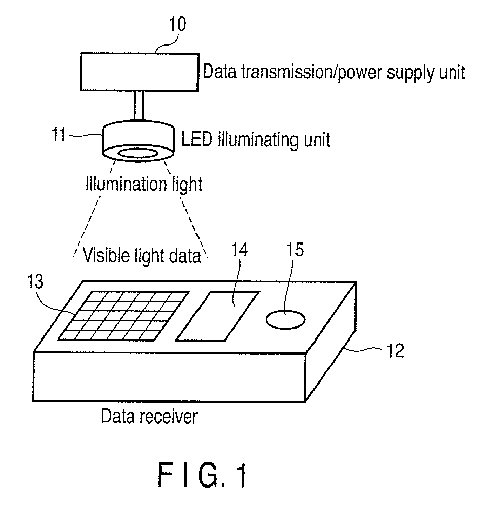

As shown in FIG. 1, the visible light communication system according to the embodiment of the present invention is composed of a transmitter for visible light communication and a receiver 12 for visible light communication. The transmitter comprises a data transmission/power supply unit 10 and an LED (Light Emitting Diode) illuminating unit 11. Illumination light is applied from the LED illuminating unit 11. The receiver 12 comprises a solar cell panel 13, a display unit 14, a speech generating unit 15 and the like. In the present embodiment, the LED is used as the illuminating device. However, the illuminating device is not limited to the LED, but may also be visible light.

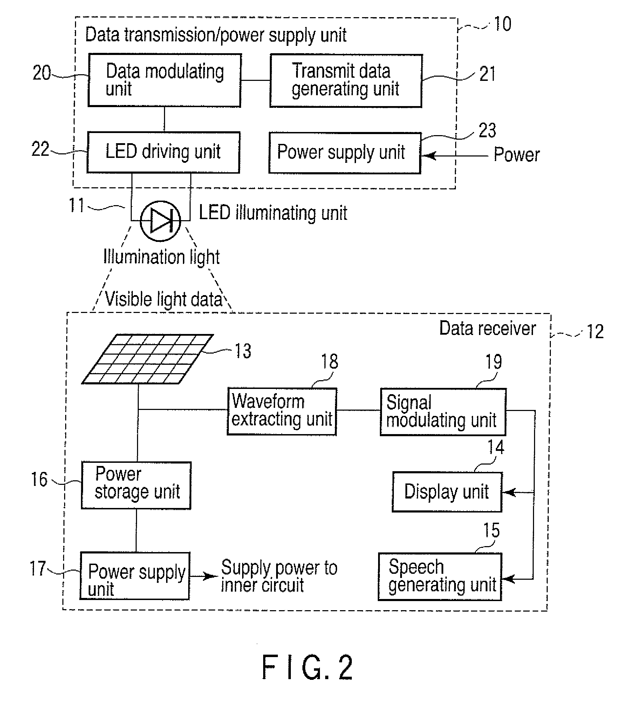

FIG. 2 is a block diagram showing the visible light communication system according to the embodiment of the present invention.

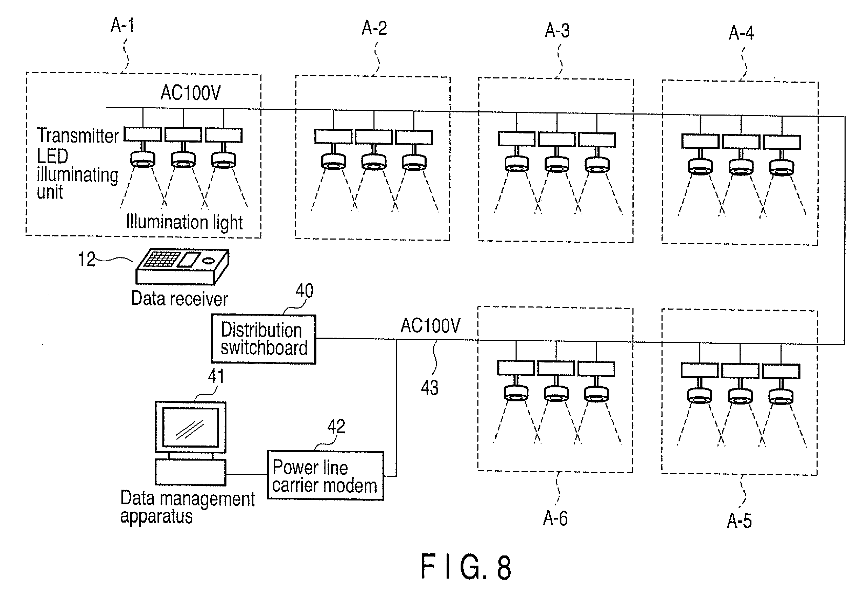

The visible light communication system according to the embodiment of the present invention will be described with reference to the block diagram. The data transmission/power supply unit 10 comprises a data modulating unit 20, a transmit data generating unit 21, an LED driving unit 22, a power supply unit 23 and the LED illuminating unit 11. A driving power supply for the LED illumination is generated, and transmit data are generated from predetermined data. The data are digital- or analog-modulated with a subcarrier at a transmission timing and output to the LED illumination together with the modulated data by the LED driving unit. The power supply unit 23 receives the power and data from a data management apparatus (data storage apparatus) 41 (see FIG. 8) to be described later via a power line 43 (see FIG. 8). The transmit data generating unit 21 generates the transmit data from the received data. In addition, the transmit data generating unit 21 generates data to transmit the data predetermined by setting, writing and the like.

The data modulating unit 20 modulates the generated data and transmits the modulated data to the LED driving unit 22. In addition, the data modulating unit 20 digital- or analog-modulates the data with the subcarrier at the transmission timing. The LED driving unit 22 executes the control to output the illumination light from the LED illuminating unit 11 on the basis of the modulated data.

The receiver 12 comprises the solar cell panel 13, a power storage unit 16, a power supply unit 17, a waveform extracting unit 18, a signal modulating unit 19, the display unit 14, and the speech generating unit 15. The solar cell panel 13 receives the illumination light and generates the power. The power storage unit 16 is a storage battery which stores the power generated by the solar cell panel 13, or a capacitor or secondary battery which stores a certain quantity of the power. The power supply unit 17 supplies the power from the power storage unit 16 to an inner circuit. In other words, the power supply unit 17 stabilizes the power and supplies the stabilized power to each of the units in the receiving-side apparatus. The waveform extracting unit 18 receives the light from the solar cell panel 13 and detects output variation of the generated power. The signal modulating unit 19 separates the modulated data from the illumination light received by the solar cell panel 13 and demodulates the separated data. In addition, the signal modulating unit 19 can obtain the data modulated by the subcarrier transmitted from the transmitting side, by capturing an output waveform variation of the output voltage or current or the like of the solar cell panel 13 which receives the illumination light including the data. The display unit 14 displays the data demodulated by the signal modulating unit 19. In other words, when the data transmitted from the transmitting side are data such as letters and characters, pictures, images and the like, the data are displayed by the display unit. The speech generating unit 15 executing outputting when the demodulated data are speech, music and the like.

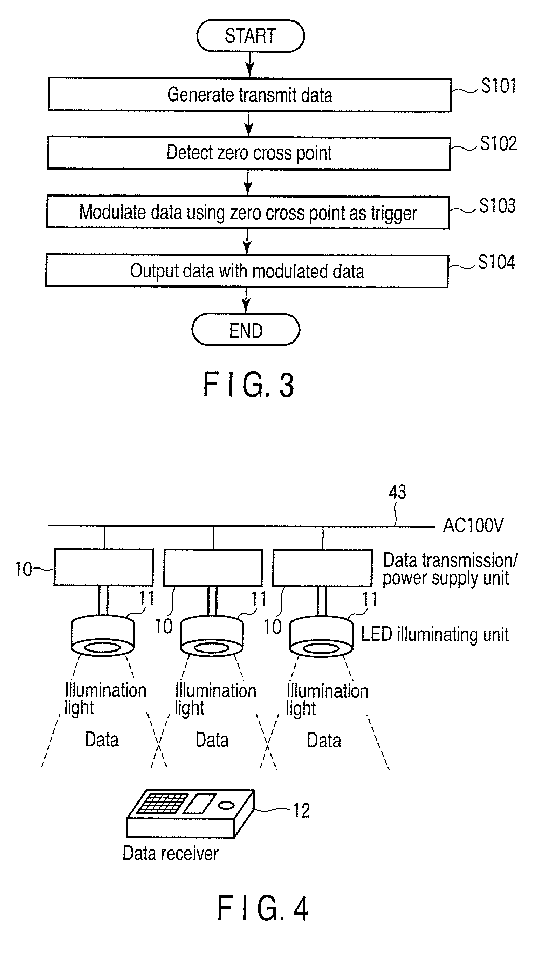

Next, a method of controlling the visible light communication system and the receiver according to the embodiment of the present invention will be described with reference to a flowchart of FIG. 3.

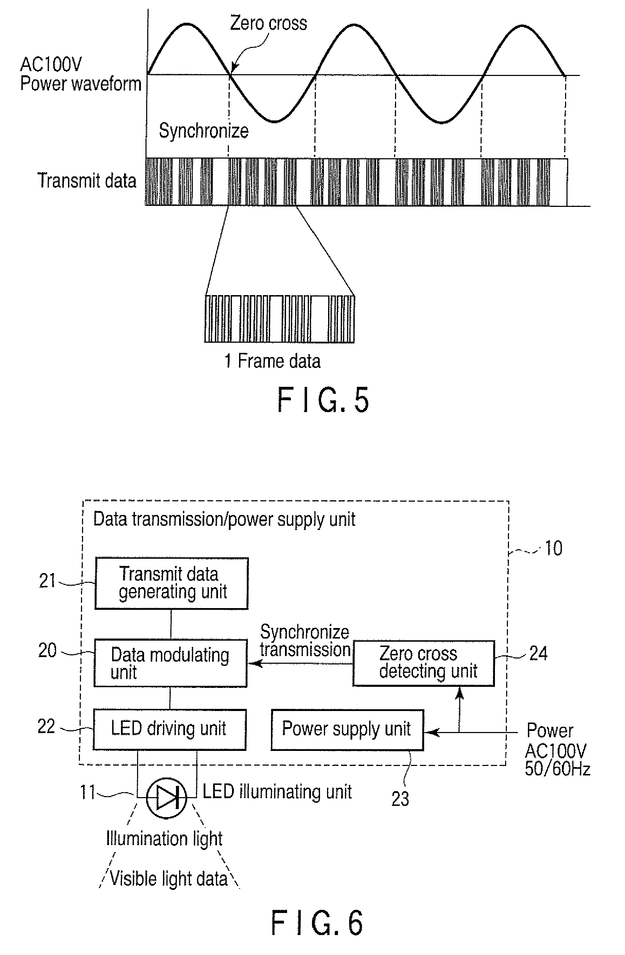

Data are transmitted to the data transmission/power supply unit 10 of the transmitter via the power line 43 by the data management apparatus 41. The power supply unit 23 of the data transmission/power supply unit 10 receives the data transmitted via the power line and transmits the data to the transmit data generating unit 21. The transmit data generating unit 21 generates transmit data (step S101). The data modulating unit 20 detects a zero cross point of an AC power supply via the power line (step S102). As for the detection of the zero cross point, for example, an AC power supply waveform to be supplied to the transmitter (a point where the AC power supply waveform is zero) is detected as the zero cross point as shown in FIG. 5. The data modulating unit 20 modulates the data by using the zero cross point as a trigger (step S103). After the data are digital- or analog-modulated with the subcarrier, the illumination light is output to the LED illuminating unit 11 together with the modulated data by the LED driving unit 22 (step S104).

Next, FIG. 4 is an illumination showing a structure in a case where a plurality of transmitters are arranged.

As shown in FIG. 4, a plurality of transmitters are arranged at adjacent positions where the illumination light causes interference.

In addition, FIG. 6 is a block diagram showing a structure of the transmitter in a case where plurality of transmitters are arranged.

The transmitter is different from that shown in FIG. 2 in terms of comprising a zero cross detecting unit 24. By transmitting information of the zero cross point detected by the zero cross detecting unit 24 to the data modulating unit 20, synchronization of the data transmission is made. In other words, with the AC power supply waveform of AC100V, 50Hz/60Hz or the like supplied to the transmitter, the data transmitted from a plurality of transmitters at the adjacent positions where the illumination light causes interference can be synchronized and output by detecting the zero cross point where the AC power supply waveform crosses 0V and outputting from the LED illumination the transmit data of each frame transmitted from the transmitter with the distribution of the zero cross point used as the synchronous signal.

In a case where the data digital- or analog-modulated with the subcarrier are output by using the illumination light as the carrier to transmit data by using the illumination light from the LED illumination as the carrier, the power is supplied to a plurality of transmitters by the AC power supply of AC 100V or the like (power line 43) and the driving power supply of the LED illumination is generated with the supplied power. The transmit data are generated with data which are predetermined by setting, writing and the like, the zero cross point in the AC power supply waveform where the power is supplied to the transmitter is detected as transmission timing of the generated data, the data are digital- or analog-modulated with the subcarrier by using the calculated zero cross point as the trigger, and the illumination light is output to the LED illumination together with the modulated data by the LED driving unit.

For this reason, even if the transmitters are arranged at adjacent positions where the illumination causes interference, the data can be received stably at the receiving side. Even if the receiver moves between the LED illuminations of the transmitters, the data can be received without interrupting the reception on the receiver 12 side. In addition, the receiver 12 can receive the data while freely moving under a plurality of illuminations.

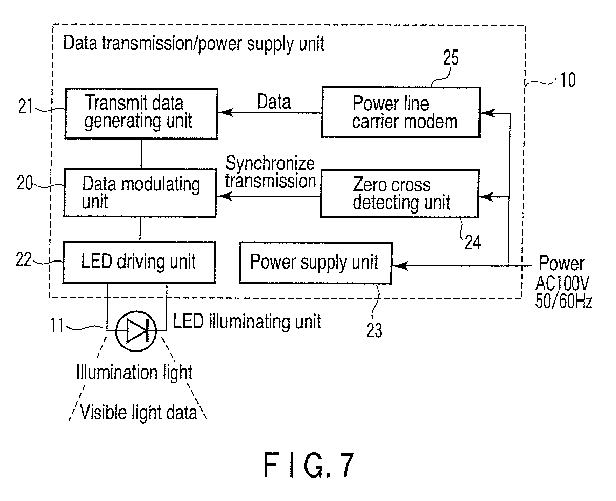

In addition, in a case where a power line carrier modem 25 is added to the structure as shown in FIG. 7, the data are received from the data management apparatus 41 not via the power line 43, but the power line carrier modem 25. In other words, the power line carrier modem 25 receives the power line carrier communication data carried by the AC power supply supplied to the transmitters. For this reason, since the data reception from the host side (data management apparatus 41) and synchronization of the transmission timings of a plurality of transmitters both can be executed by the AC power supply supplied to the transmitters, the communication apparatus which does not require cables for communication and synchronization except the cables for the power supply and which uses a plurality of illuminations for variable transmit data can be implemented.

Next, FIG. 8 is an illustration showing a structure in a case where a plurality of transmitters are arranged together at specific positions. These transmitters A-1 to A-6 are connected by the AC power supply (power line 43) for supplying the power. The AC power is supplied from a distribution switchboard 40 which serves as a power supplier, and connected to the data management apparatus 41 via a power line carrier modem 42, such that the transmit data are transmitted from the data management apparatus 41 to the transmitters A-1 to A-6 using the LED illuminations by the power line carrier data communication. The transmitted data are output as the illumination light from the LED illuminations and transmitted to the receiver 12.

Thus, the same data can be transmitted to a number of transmitters A-1 to A-6 without interference. Since the transmitters A-1 to A-6 temporarily store and modulate the data transmitted from the data management apparatus 41 and then transmit the data to the receiver 12 as the LED illuminations, short time lag occurs. For this reason, the data are not transmitted via the power line 43 at a real time.

According to the present embodiment, since the solar cell panel is used as the received light of the illumination light and the supply of the power is also executed at the receiver side, the receiver can be employed without a power source. Even if a plurality of transmitters are arranged, exact data communication can be executed without interference.

The present invention is not limited to the embodiments described above but the constituent elements of the invention can be modified in various manners without departing from the spirit and scope of the invention. Various aspects of the invention can also be extracted from any appropriate combination of a plurality of constituent elements disclosed in the embodiments. Some constituent elements may be deleted in all of the constituent elements disclosed in the embodiments. The constituent elements described in different embodiments may be combined arbitrarily.

### Industrial Applicability

According to the present invention, a receiver and system for visible light communication in which supply of the power to the receiver is unnecessary can be provided.

## Claims

1. A visible light communication system, comprising a data storage apparatus, a data transmitter and a data receiver,
**characterized in that** the data transmitter comprises:
data receiving means for receiving data from the data storage apparatus;
modulating means for modulating the data received by the data receiving means; and
transmitting means for transmitting the data modulated by the modulating means to the data receiver as a carrier of illumination light, and
the data receiver comprises:
illumination light detecting means for detecting the illumination light received by the transmitting means in accordance with an output variation of power converting means;
demodulating means for demodulating the illumination light detected by the illumination light detecting means; and
displaying means for displaying the data demodulated by the demodulating means.

2. The system according to claim 1, **characterized in that** after storing the data received by the data receiving means, the modulating means modulates the received data and generates transmit data.

3. The system according to claim 1, **characterized in that** the illumination light is an LED.

4. The system according to claim 1, **characterized in that** the demodulating means separates the data from the illumination light detected by the illumination light detecting means, and demodulates the separated data.

5. The system according to claim 1, **characterized in that** the data is received from the data storage apparatus via a power line.

6. The system according to claim 5, **characterized in that** if a plurality of data transmitters identical with the data transmitter are provided and same data are transmitted from the data transmitters, a zero cross point of an AC power supply flowing in the power line is detected and a synchronous trigger of the transmission of the data from the plurality of data transmitters is regarded as the zero cross point.

7. A receiver for visible light communication, **characterized by** comprising:
illumination light detecting means for detecting illumination light of modulated data, in accordance with an output variation of power converting means;
demodulating means for demodulating the illumination light detected by the illumination light detecting means; and
displaying means for displaying the data demodulated by the demodulating means.

8. The receiver according to claim 7, **characterized in that** the illumination light is an LED.

9. The receiver according to claim 7, **characterized in that** the demodulating means separates the data from the illumination light detected by the illumination light detecting means, and demodulates the separated data.

10. The receiver according to claim 7, **characterized in that** the data is received from the data storage apparatus via a power line.
